# EUROPÄISCHE PATENTSCHRIFT

(11) **EP 0 603 747 B1**
(45) Veröffentlichungstag und Bekanntmachung des Hinweises auf die Patenterteilung: **13.09.1995**
(21) Anmeldenummer: 93120312.9
(22) Anmeldetag: 16.12.1993
(51) Int. Cl.: C04B 41/49, C09D 183/08

(54) **Zusammensetzungen zur Imprägnierung von mineralischen Baustoffen**
Composition for impregnating mineral building materials
Composition pour d'imprégnation de matériaux de construction

(30) Priorität: 16.12.1992 DE 4242445
(43) Veröffentlichungstag der Anmeldung: 29.06.1994
(73) Patentinhaber: Wacker-Chemie GmbH, 81737 München (DE)
(72) Erfinder: Dr. Mayer, Hans, D-84489 Burghausen (DE); Kammerbauer, Wilhelm, D-84533 Marktl (DE); König-Lumer, Ingeborg, D-84489 Burghausen (DE)

(56) Entgegenhaltungen:
- EP-A- 0 186 847
- EP-A- 0 337 478
- US-A- 4 968 727
- DATABASE WPI Section Ch, Week 0291, Derwent Publications Ltd., London, GB; Class A82, AN 91-012443 'Paint composition coating metallic structure - contains fluoro:resin modified by polysiloxane compound' & JP-A-2 286 759 (DAINICHISEIKA COLOR CHEM) 26. November 1990

## Beschreibung

Die Erfindung betrifft Zusammensetzungen zur Imprägnierung von mineralischen Baustoffen, insbesondere zur wasserabweisenden, ölabweisenden und ausblühungsverhindernden Imprägnierung.

Zahlreiche Versuche wurden bereits unternommen, mineralische Baustoffe wasserabweisend und ölabweisend zu machen sowie die Entstehung heller, schleierartiger Verfärbungen, die im allgemeinen als Ausblühungen bezeichnet werden, zu verhindern. Insbesondere bei frisch entschaltem, noch nicht abgebundenem Beton oder noch nicht abgebundenem Faserzement, welcher unmittelbar nach der Herstellung in Anwesenheit von Feuchtigkeit gelagert wird, treten störende weiße Flecken auf, die das entsprechende Bauteil für Anwendungen im Sichtbereich unbrauchbar machen. Diese Ausblühungen müssen dann mühsam entfernt werden. Hierzu sei beispielsweise auf DE-AS 21 28 652 (Michoud et al; ausgegeben am 22. Mai 1975) verwiesen, worin ein Verfahren zum Reinigen und Abdichten von Betonbauten offenbart wird, bei dem die Betonoberfläche zuerst mit einer Mischung aus Ameisensäure, Oxyethylamin und Aluminiumtriformiat gereinigt und anschließend imprägniert wird.

Des weiteren ist in EP 101 816 B (Dynamit Nobel; ausgegeben am 18. Dezember 1985) bzw. der entsprechenden US 4,716,051 sowie in EP 392 253 A (Th. Goldschmidt AG; ausgegeben am 17. Oktober 1990) bzw. der entsprechenden US 5,091,002 die Hydrophobierung von Schwerbeton mit Hilfe von Alkoxygruppen aufweisenden siliciumorganischen Verbindungen beschrieben und in DE 25 26 287 C (Wacker-Chemie GmbH; ausgegeben am 30. September 1982) bzw. der entsprechenden US 4,125,673 Fluorchemikalien als öl- und fleckenabweisendes Mittel offenbart.

Gegenstand der Erfindung sind Zusammensetzungen zur Imprägnierung von mineralischen Baustoffen, die
(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
   sowie
(B) Fluor-enthaltende, organische oder siliciumorganische Verbindung und
   gegebenenfalls
(C) Organosiliciumverbindung mit basischem Stickstoff in Mengen von 0 bis 0,5 Gewichtsprozent, bezogen auf das Gewicht dieser Organosiliciumverbindung,
enthalten.

Der Begriff "basischer Stickstoff", wie er im Rahmen dieser Erfindung mit Mengenangaben gebraucht wird, bezieht sich auf Stickstoff, berechnet als Element.

Die Organopolysiloxane, durch deren Umsetzung mit organischer oder anorganischer Säure Bestandteil (A) der erfindungsgemäßen Zusammensetzung erhältlich ist, sind vorzugsweise solche der Formel 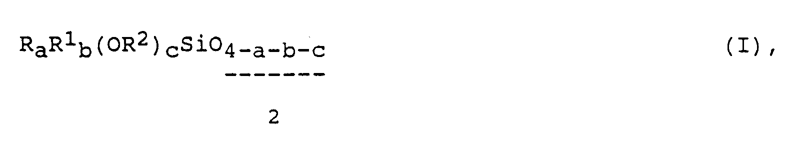
worin
- R: gleich oder verschieden sein kann und Wasserstoff oder einwertige, von basischem Stickstoff freie, SiC-gebundene organische Reste bedeutet,
- R¹: gleich oder verschieden sein kann und einwertige, SiC-gebundene Reste mit basischem Stickstoff bedeutet,
- R²: gleich oder verschieden sein kann und Wasserstoffatom oder einwertige organische Reste bedeutet,
- a: 0, 1, 2 oder 3,
- b: 0, 1, 2 oder 3 und
- c: 0, 1, 2 oder 3 ist,
mit der Maßgabe, daß die Summe aus a, b und c kleiner oder gleich 3 ist und Rest R¹ in Mengen von mehr als 0,5 Gewichtsprozent basischem Stickstoff pro Organopolysiloxanmolekül vorhanden ist.

Bevorzugt handelt es sich bei Rest R um gegebenenfalls substituierte Kohlenwasserstoffreste mit 1 bis 20 Kohlenstoffatomen, wobei Kohlenwasserstoffreste mit 1 bis 8 Kohlenstoffatomen, insbesondere der Methyl- und der Isooctylrest, besonders bevorzugt sind.

Vorzugsweise ist an jedes Siliciumatom, an das ein Wasserstoffatom gebunden ist, auch ein Kohlenwasserstoffrest, insbesondere ein Methylrest, gebunden.

Bevorzugt handelt es sich bei Rest R¹ um solche der Formel

R³₂NR⁴- (II),

worin R³ gleich oder verschieden sein kann und Wasserstoff oder einwertiger, gegebenenfalls mit Aminogruppen substituierter Kohlenwasserstoffrest bedeutet und R⁴ zweiwertiger Kohlenwasserstoffrest bedeutet.

Bevorzugt handelt es sich bei Rest R³ um den Aminoethylrest.

Vorzugsweise ist an jedes Stickstoffatom in den Resten der Formel (II) mindestens ein Wasserstoffatom gebunden.

Bevorzugt handelt es sich bei Rest R⁴ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Reste R¹ sind
H₂N(CH₂)₃-,
H₂N(CH₂)₂NH(CH₂)₂-,
H₂N(CH₂)₂NH(CH₂)₃-,
H₂N(CH₂)₂-,
H₃CNH(CH₂)₃-,
C₂H₅NH(CH₂)₃-,
H₃CNH(CH₂)₂-,
C₂H₅NH(CH₂)₂-,
H₂N(CH₂)₄-,
H₂N(CH₂)₅-,
H(NHCH₂CH₂)₃-,
C₄H₉NH(CH₂)₂NH(CH₂)₂-,
cyclo-C₆H₁₁NH(CH₂)₃-,
cyclo-C₆H₁₁NH(CH₂)₂-,
(CH₃)₂N(CH₂)₃- ,
(CH₃)₂N(CH₂)₂- ,
(C₂H₅)₂N(CH₂)₃- und
(C₂H₅)₂N(CH₂)₂- .

Bevorzugt handelt es sich bei Rest R¹ um H₂N(CH₂)₃- und H₂N(CH₂)₂NH(CH₂)₃-, wobei H₂N(CH₂)₂NH(CH₂)₃- besonders bevorzugt ist.

Des weiteren kann es sich bei Rest R¹ auch um cyclische Aminreste, wie Piperidylreste, handeln.

Bevorzugt handelt es sich bei Rest R² um Wasserstoffatom und Alkylreste mit 1 bis 4 Kohlenstoffatomen, wobei der Methyl-, Ethyl- und Propylrest besonders bevorzugt sind.

Der durchschnittliche Wert für a ist 0 bis 2, vorzugsweise 0 bis 1,8.

Der durchschnittliche Wert für b ist 0,1 bis 0,6, vorzugsweise 0,15 bis 0,30.

Der durchschnittliche Wert für c ist 0 bis 0,8, vorzugsweise 0,01 bis 0,6.

Beispiele für Organopolysiloxane aus Einheiten der Formel (I) sind das Umsetzungsprodukt von Tetraethylsilikat mit N-(2-Aminoethyl)-3-aminopropyltrimethoxysilan mit einer Viskosität von 6 bis 7 mm²/s (25°C) und einer Aminzahl von 2,15 (Siloxan i), das Umsetzungsprodukt von α,ω-Dihydroxydimethylpolysiloxan und N-(2-Aminoethyl)-3-aminopropyltrimethoxysilan mit einer Viskosität von 20 bis 50 mm²/s (25°C) und einer Aminzahl zwischen 2,7 und 3,2 (Siloxan ii) sowie das Umsetzungsprodukt von CH₃Si(OC₂H₅)_{0,8}O_{1,1} und N-(2-Aminoethyl)-3-aminopropyltrimethoxysilan mit einer Viskosität von 60 mm²/s (25°C) und einer Aminzahl von 2,15 (Siloxan iii), wobei (Siloxan ii) und (Siloxan iii) bevorzugt und (Siloxan ii) besonders bevorzugt sind und die Aminzahl der Anzahl der ml 1-n-HCl, die zum Neutralisieren von 1 g Substanz erforderlich sind, entspricht.

Vorzugsweise haben die Organopolysiloxane aus Einheiten der Formel (I) eine Viskosität von 6 bis 60 mm²/s, bezogen auf 25°C.

Die organischen oder anorganischen Säuren, die zur Herstellung von Bestandteil (A) des erfindungsgemäßen Imprägniermittels verwendet werden, können die gleichen sein, die auch bisher zur Herstellung von Salzen von organischer oder anorganischer Säure und Organopolysiloxan mit basischen Stickstoff aufweisenden, SiC-gebundenen Resten eingesetzt werden konnten. Beispiele für derartige Säuren sind HCl, H₂SO₄, Essigsäure, Propionsäure und Diethylhydrogenphosphat, wobei Essigsäure und Propionsäure bevorzugt und Essigsäure besonders bevorzugt sind.

Bei dem als Komponente (A) eingesetzten Organopolysiloxansalz kann es sich um eine einzelne Art dieses Salzes wie auch um ein Gemisch aus mindestens zwei Arten eines solchen Salzes handeln.

Bei der gegebenenfalls eingesetzten Organosiliciumverbindung (C) handelt es sich vorzugsweise um solche aus Einheiten der Formel 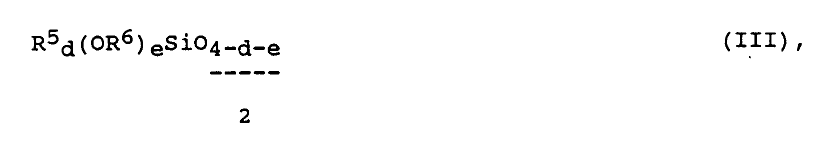
worin
- R⁵: gleich oder verschieden sein kann und Wasserstoff oder einwertige, SiC-gebundene organische Reste bedeutet,
- R⁶: gleich oder verschieden sein kann und Wasserstoffatom oder einwertige organische Reste bedeutet,
- d: 0, 1, 2, 3 oder 4 und
- e: 0, 1, 2, 3 oder 4 ist,
mit der Maßgabe, daß die Summe aus d und e kleiner oder gleich 4 ist und der Gehalt an basischem Stickstoff 0 bis 0,5 Gewichtsprozent, bezogen auf das Gewicht der jeweiligen Organosiliciumverbindung, beträgt.

Bevorzugt handelt es sich bei Rest R⁵ um Kohlenwasserstoffreste mit 1 bis 8 Kohlenstoffatomen, wobei der Methyl- und Isooctylrest besonders bevorzugt sind.

Bevorzugt handelt es sich bei Rest R⁶ um den Methyl-, Ethyl- und Propylrest, wobei der Methyl- und Ethylrest besonders bevorzugt sind.

Bei der Organosiliciumverbindung aus Einheiten der Formel (III) kann es sich um Silane handeln, d.h. die Summe aus d und e ist gleich 4.

Bei den Organosiliciumverbindungen aus Einheiten der Formel (III) kann es sich auch um Organopolysiloxane handeln, d.h. die Summe aus d und e ist kleiner oder gleich 3.

Beispiele für Silane der Formel (III) sind i-Octyltrimethoxysilan und i-Octyltriethoxysilan.

Beispiele für Organopolysiloxane aus Einheiten der Formel (III) sind Methylethoxypolysiloxane, Dimethylpolysiloxane und i-Octylmethoxypolysiloxane.

Vorzugsweise haben die Organopolysiloxane aus Einheiten der Formel (III) eine Viskosität von 5 bis 2000 mm²/s, besonders bevorzugt 10 bis 500 mm²/s, jeweils bezogen auf 25°C.

Bei der gegebenenfalls eingesetzten Organosiliciumverbindung (C) handelt es sich besonders bevorzugt um Silane und niedermolekulare Siloxane, insbesondere um Silane.

Falls zur Herstellung der erfindungsgemäßen Zusammensetzung Organosiliciumverbindung (C) verwendet wird, wird diese in Mengen von vorzugsweise 0,1 bis 5 Gewichtsteilen, besonders bevorzugt 1,5 bis 3 Gewichtsteilen, je Gewichtsteil Komponente (A), eingesetzt.

Bevorzugt enthalten die erfindungsgemäßen Zusammensetzungen Komponente (C).

Bei der gegebenenfalls eingesetzten Organosiliciumverbindung (C) kann es sich um eine Art wie auch um ein Gemisch aus mindestens zwei Arten einer derartigen Organosiliciumverbindung handeln.

Verbindungen, die als Komponente (A) in der erfindungsgemäßen Zusammensetzung eingesetzt werden können, und Verbindungen, die als Komponente (C) in der erfindungsgemäßen Zusammensetzung eingesetzt werden können, sowie Gemische aus Komponente (A) und (C) sind bereits bekannt. Hierzu sei beispielsweise auf US 4,661,551 (Wacker-Chemie GmbH; ausgegeben am 28. April 1984) bzw. der entsprechenden DE 34 47 636 A1 (ausgegeben am 3. Juli 1986) verwiesen.

Bei den Fluor enthaltenden, organischen Verbindungen (B) handelt es sich vorzugsweise um polymere Verbindungen, die aus Fluor- und Kohlenstoffatomen sowie gegebenenfalls Chlor-, Wasserstoff-, Sauerstoff-, Schwefel-, Phosphor- und/oder Stickstoffatomen bestehen.

Beispiele für solche Fluorverbindungen sind Polytetrafluorethylen, Mischpolymerisate aus Tetrafluorethylen und Hexafluorpropylen, Polytrifluorchlorethylen, Fluorurethan, Mischpolymerisate aus Trifluorchlorethylen und anderen Monomeren, wie Vinylidenfluorid, Vinylchlorid, Vinylacetat oder Styrol; fluorierte Acrylharze, wie Polymerisate von 1,1-Dihydroperfluorbutylacrylat und Mischpolymerisate aus n-Butylacrylat, N-Methylolacrylamid und mindestens 35 Gewichtsprozent Methacrylsäureester der Formel 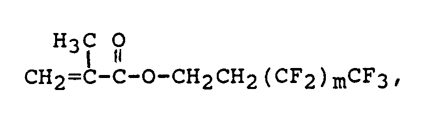
wobei m eine ganze Zahl im Wert von 1 bis 13 ist.

Besonders bevorzugt handelt es sich bei den Fluor enthaltenden, organischen Verbindungen um fluorierte Polyacrylate und Polyurethane.

Bei den Fluor enthaltenden, siliciumorganischen Verbindungen (B) handelt es sich vorzugsweise um mit Trimethylsilylgruppen terminierte 3,3,3-Trifluor-n-propylmethylpolysiloxane.

Bei der erfindungsgemäß eingesetzten Fluor enthaltenden, organischen oder siliciumorganischen Verbindung (B) kann es sich um eine Art wie auch um ein Gemisch aus mindestens zwei Arten einer derartigen Verbindung handeln.

Vorzugsweise enthalten die erfindungsgemäßen Zusammensetzungen Bestandteil (B) in Mengen von 0,1 bis 50 Gewichtsteilen, besonders bevorzugt von 1 bis 5 Gewichtsteilen, je Gewichtsteil Bestandteil (A).

Die Fluor-enthaltende organische oder siliciumorganische Verbindung (B) wird vorzugsweise als wäßrige, gegebenenfalls organisches Lösungsmittel enthaltende Dispersion oder in einem organischen Lösungsmittel gelöst, eingesetzt.

Die Konzentration der Fluor-enthaltenden, organischen oder siliciumorganischen Verbindungen in ihren Dispersionen oder Lösungen beträgt vorzugsweise jeweils höchstens 20 Gewichtsprozent, bezogen auf das Gesamtgewicht der Dispersion oder Lösung.

Beispiele für organisches Lösungsmittel, welches in der wäßrigen Dispersion der Komponente (B) enthalten sein kann oder in welchem Komponente (B) gelöst sein kann, sind Ethylenglycol und Butylacetat. Falls zur Herstellung der wäßrigen Dispersionen von (B) organisches Lösungsmittel verwendet wird, handelt es sich besonders bevorzugt um solches, in welchem sich Komponente (B) löst.

Die erfindungsgemäß eingesetzten Dispersionen und Lösungen von Komponente (B) können zusätzlich zu Fluor-enthaltender, organischer oder siliciumorganischer Verbindung, Wasser bzw. organischem Lösungsmittel gegebenenfalls weitere Stoffe, wie Konservierungsmittel und Dispergiermittel, enthalten.

Fluor-enthaltende, organische Verbindungen sowie deren Dispersionen und Lösungen sind bereits bekannt. Hierzu sei beispielsweise auf die eingangs zitierte DE 25 26 287 C verwiesen.

Fluor-enthaltende, siliciumorganische Verbindungen sowie deren Dispersionen und Lösungen sind ebenfalls bereits bekannt.

Die erfindungsgemäßen Zusammensetzungen können Zusatzstoffe (D), wie beispielsweise Konservierungsmittel und Dispergiermittel enthalten.

Falls zur Herstellung der erfindungsgemäßen Zusammensetzung Zusatzstoffe (D) verwendet werden, werden diese in Mengen von vorzugsweise 0,1 bis 1,0 Gewichtsteilen, besonders bevorzugt 0,1 bis 0,5 Gewichtsteilen, je Gewichtsteil Komponente (A), eingesetzt.

Die erfindungsgemäße Zusammensetzung hat einen pH-Wert von vorzugsweise 4 bis 7, besonders bevorzugt 5.

Die erfindungsgemäße Zusammensetzung enthält Wasser in Mengen von vorzugsweise 5 bis 50 Gewichtsteile, besonders bevorzugt 20 bis 40 Gewichtsteile, je Gewichtsteil Komponente (A).

Die erfindungsgemäße Zusammensetzung kann durch beliebiges Vermischen der erfindungsgemäß eingesetzten Komponenten hergestellt werden. Vorzugsweise erfolgt dies durch Vermischen von Organopolysiloxan aus Einheiten der Formel (I) mit organischer oder anorganischer Säure zur Bildung des Bestandteils (A) sowie mit den übrigen Bestandteilen. Vorzugsweise wird dieses Vermischen bei einer Temperatur von 20 bis 120°C und einem Druck von 900 bis 1100 hPa durchgeführt.

Die erfindungegmäßen Zusammensetzungen haben den Vorteil, wasserabweisend und ölabweisend sowie ausblühungsverhindernd zu wirken, insbesondere auf feuchten Untergründen, in die lösungsmittelhaltige Zusammensetzungen nicht penetrieren und meist glänzende Überzüge bilden.

Bei den mineralischen Baustoffen, die mit den erfindungsgemäßen Zusammensetzungen imprägniert werden können, handelt es sich bevorzugt um alkalisch reagierende, mineralische Baustoffe, insbesondere um solche, die noch nicht abreagiertes hydraulisches Bindemittel, wie freien Kalk, enthalten. Dies ist im allgemeinen bei noch nicht gealterten Baustoffen der Fall, in denen der freie Kalk nicht völlig carbonisiert ist.

Beispiele für alkalisch reagierende, mineralische Baustoffe sind frisch entschalter Beton, Mauerwerk, aus Portlandzement hergestellte Massen und Faserzementplatten, wobei es sich besonders bevorzugt um frischen Beton handelt.

Ein weiterer Gegenstand der vorliegenden Erfindung ist ein Verfahren zur Imprägnierung von mineralischen Baustoffen, insbesondere alkalisch reagierenden, mineralischen Baustoffen, dadurch gekennzeichnet, daß die erfindungsgemäße Zusammensetzung auf die zu imprägnierende Oberfläche aufgebracht wird.

Das Aufbringen der erfindungsgemäßen Zusammensetzungen kann in beliebiger Weise, wie beispielsweise durch Aufsprühen, Gießen, Streichen, Walzen oder Tauchen, erfolgen.

Bei dem erfindungsgemäßen Verfahren werden vorzugsweise 100 bis 500 g, insbesondere 300 bis 500 g, der erfindungsgemäßen Zusammensetzung je m² zu imprägnierender Oberfläche aufgetragen.

Das erfindungsgemäße Verfahren hat den Vorteil, daß sehr einfach und wirkungsvoll Wasserabweisung, Ölabweisung und Ausblühungsverhinderung erzielt wird.

Die erfindungsgemäß imprägnierten Baustoffe haben den Vorteil, daß sie wasser- und ölabweisende Eigenschaften aufweisen und zugleich keine Weißfleckenbildung (Ausblühung) zeigen.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

### a) Herstellung eines Gemisches aus einem Salz von organischer oder anorganischer Säure und Organopolysiloxan mit basischem Stickstoff (Komponente A) und Organosiliciumverbindung (Komponente C)

27 Teile eines α,ω-Dihydroxy[dimethyl/methyl-N-(2-aminoethyl)-3-aminopropyl]polysiloxans mit einem durchschnittlichen Molekulargewicht von etwa 4000 g/Mol und einem Gehalt an basischem Stickstoff von 2,0 %, bezogen auf das Gewicht dieses Siloxans,
7 Teile Eisessig,
50 Teile Isooctyltrimethoxysilan,
15 Teile Tetraethylorthosilikat und
12 Teile eines oligomeren Gemisches aus Methoxygruppen aufweisendem Monomethylsiloxan und Monoisooctylsiloxan mit einem durchschnittlichen Molekulargewicht von etwa 400 g/Mol werden miteinander vermischt.

Zur Herstellung des Imprägniermittels werden 10 Teile des oben unter a) beschriebenen Gemisches mit 15 Teilen einer Fluorpolymerdispersion bestehend aus 30 % Fluorurethan, 10 % Ethylenglykol, 60 % Wasser und < 1 % Ethylacetat (käuflich erhältlich unter der Bezeichnung Scotchgard FX-3567 bei 3M Deutschland GmbH, D-4040 Neuss) und 75 Teilen Wasser vermischt. Es resultiert eine stabile, milchige Dispersion, die auch nach 24 Stunden Lagerung keine Phasentrennung zeigt.

Ein Gemisch aus 1350 g Normensand, 200 g Zement und 140 g Wasser wird in runde Schalformen gestampft, 6 Stunden stehengelassen und dann entschalt. Auf die so erhaltenen umbrabraunen Betonrundproben mit einer Dicke von 2,0 cm und einem Durchmesser von 8,5 cm werden nun 400 g/m² Imprägniermittel durch Streichen aufgetragen und 24 Stunden stehengelassen. Anschließend werden auf eine Betonrundprobe im Abstand von 24 Stunden je 3 ml destilliertes Wasser aufgetragen. Das Wasser bleibt auf der Betonoberfläche stehen und lüftet ab, wobei keine Weißfleckenbildung (Ausblühung) beobachtet wird.

### Beispiel 2

Zur Herstellung des Imprägniermittels werden 10 Teile des in Beispiel 1 unter a) beschriebenen Gemisches mit 15 Teilen einer 30 %igen Fluoracrylatdispersion (käuflich erhältlich unter der Bezeichnung Scotchgard FC-393 bei 3M Deutschland GmbH, D-4040 Neuss) und 75 Teilen Wasser vermischt. Es resultiert eine milchige, stabile Dispersion, die auch nach 24 Stunden Lagerung keine phasentrennung zeigt.

Auf die umbrabraunen Betonrundproben, deren Herstellung in Beispiel 1 beschrieben ist, werden nun 400 g/m² Imprägniermittel durch Streichen aufgetragen und 24 Stunden stehengelassen. Anschließend werden auf eine Betonrundprobe im Abstand von 24 Stunden je 3 ml destilliertes Wasser aufgetragen. Das Wasser bleibt auf der Betonoberfläche stehen und lüftet ab, wobei keine Weißfleckenbildung (Ausblühung) beobachtet wird.

### Beispiel 3

### b) Herstellung eines Gemisches aus einem Salz von organischer oder anorganischer Säure und Organopolysiloxan mit basischem Stickstoff (Komponente A) und Organosiliciumverbindung (Komponente C)

31 Teile eines α,ω-Dihydroxy[dimethyl/methyl-N-(2-aminoethyl)-3-aminopropyl]polysiloxans mit einem durchschnittlichen Molekulargewicht von etwa 4000 g/Mol und einem Gehalt an basischem Stickstoff von 2,6 %, bezogen auf das Gewicht dieses Siloxans,
8 Teile Eisessig,
27 Teile Isooctyltrimethoxysilan,
12 Teile Polyethylsilikat mit einem durchschnittlichen Molekulargewicht von 450 g/mol und einer Viskosität von 4 mm²/s und
23 Teile eines oligomeren Gemisches aus Methoxygruppen aufweisendem Monomethylsiloxan und Monoisooctylsiloxan mit einem durchschnittlichen Molekulargewicht von etwa 400 g/Mol werden miteinander vermischt.

Zur Herstellung des Imprägniermittels werden 15 Teile einer Fluorpolymerdispersion bestehend aus 30 % Fluorurethan, 10 % Ethylenglykol, 60 % Wasser und < 1 % Ethylacetat (käuflich erhältlich unter der Bezeichnung Scotchgard FX-3567 bei 3M Deutschland GmbH, D-4040 Neuss) mit 75 Teilen Wasser vermischt und diese Emulsion mit 10 Teilen des oben unter b) beschriebenen Gemisches versetzt. Es resultiert eine milchige, stabile Dispersion, die auch nach 24 Stunden Lagerung keine Phasentrennung zeigt.

Auf die umbrabraunen Betonrundproben, deren Herstellung in Beispiel 1 beschrieben ist, werden nun 400 g/m² Imprägniermittel durch Streichen aufgetragen und 24 Stunden stehengelassen. Anschließend werden auf eine Betonrundprobe im Abstand von 24 Stunden je 3 ml destilliertes Wasser aufgetragen. Das Wasser bleibt auf der Betonoberfläche stehen und lüftet ab, wobei keine Weißfleckenbildung (Ausblühung) beobachtet wird.

### Beispiel 4

Zur Herstellung des Imprägniermittels werden 10 Teile des in Beispiel 3 unter b) beschriebenen Gemisches mit 15 Teilen einer 30 %igen Fluoracrylatdispersion (käuflich erhältlich unter der Bezeichnung Scotchgard FC-393 bei 3M Deutschland GmbH, D-4040 Neuss) und 75 Teilen Wasser vermischt. Es resultiert eine milchige, stabile Dispersion, die auch nach 24 Stunden Lagerung keine Phasentrennung zeigt.

Auf die umbrabraunen Betonrundproben, deren Herstellung in Beispiel 1 beschrieben ist, werden nun 400 g/m² Imprägniermittel durch Streichen aufgetragen und 24 Stunden stehengelassen. Anschließend werden auf eine Betonrundprobe im Abstand von 24 Stunden je 3 ml destilliertes Wasser aufgetragen. Das Wasser bleibt auf der Betonoberfläche stehen und lüftet ab, wobei keine Weißfleckenbildung (Ausblühung) beobachtet wird.

### Vergleichsversuch 1

Ein Gemisch aus 1350 g Normensand, 200 g Zement und 140 g Wasser wird in runde Schalformen gestampft, 6 Stunden stehengelassen und dann entschalt. Die so erhaltenen umbrabraunen Betonrundproben mit einer Dicke von 2,0 cm und einem Durchmesser von 8,5 cm werden nun 24 Stunden stehengelassen. Anschließend wird auf eine Betonrundprobe 3 ml destilliertes Wasser aufgetragen. Das Wasser dringt sofort ein. Bereits nach 24 Stunden wird eine starke Weißfleckenbildung (Ausblühung) beobachtet.

### Vergleichsversuch 2

10 Teile des in Beispiel 3 unter b) hergestellten Gemisches werden in 90 Teile Wasser eingegossen. Nach dem Umrühren resultiert ein durchsichtiges Gemisch mit einer Teilchengröße von 30 nm.

Auf die umbrabraunen Betonrundproben, deren Herstellung in Beispiel 1 beschrieben ist, werden nun 400 g/m² von diesem Imprägniermittel durch Streichen aufgetragen und 24 Stunden stehengelassen. Anschließend wird auf eine Betonrundprobe 3 ml destilliertes Wasser aufgetragen. Das Wasser bleibt auf der Betonoberfläche stehen. Nach dem Ablüften des Wassers wird eine starke Weißfleckenbildung (Ausblühung) festgestellt.

### Vergleichsbeispiel 3

17 Teile der in Beispiel 1 beschriebenen Fluorpolymerdispersion werden mit 83 Teilen Wasser vermischt.

Auf die umbrabraunen Betonrundproben, deren Herstellung in Beispiel 1 beschrieben ist, werden nun 400 g/m² von diesem Imprägniermittel durch Streichen aufgetragen und 24 Stunden stehengelassen. Anschließend wird auf eine Betonrundprobe 3 ml destilliertes Wasser aufgetragen. Das Wasser bleibt für eine Dauer von einer Stunde auf der Betonoberfläche stehen und ist dann vollständig eingedrungen. Bereits nach 24 Stunden wird eine starke Weißfleckenbildung (Ausblühung) festgestellt.

## Patentansprüche

1. Zusammensetzungen zur Imprägnierung von mineralischen Baustoffen, die
(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
sowie
(B) Fluor enthaltende, organische oder siliciumorganische Verbindung und
gegebenenfalls
(C) Organosiliciumverbindung mit basischem Stickstoff in Mengen von 0 bis 0,5 Gewichtsprozent, bezogen auf das Gewicht dieser Organosiliciumverbindung,
enthalten.

2. Zusammensetzung nach Anspruch 1, dadurch gekennzeichnet, daß als Organopolysiloxane, durch deren Umsetzung mit organischer oder anorganischer Säure Bestandteil (A) erhältlich ist, solche der Formel 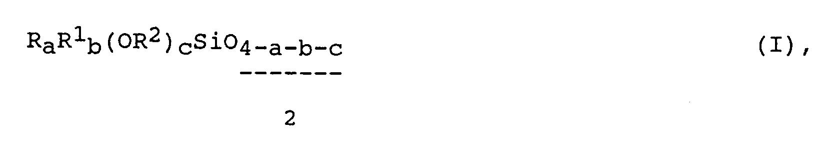 eingesetzt werden, worin
R gleich oder verschieden sein kann und Wasserstoff oder einwertige, von basischem Stickstoff freie, SiC-gebundene gegebenenfalls substituierte Kohlenwasserstoffreste mit 1 bis 20 Kohlenstoffatomen bedeutet,
R¹ gleich oder verschieden sein kann und einwertige, SiC-gebundene Reste mit basischem Stickstoff bedeutet,
R² gleich oder verschieden sein kann und Wasserstoffatom oder einwertige Alkylreste mit 1 bis 4 Kohlenstoffatomen bedeutet,
a 0, 1, 2 oder 3,
b 0, 1, 2 oder 3 und
c 0, 1, 2 oder 3 ist,
mit der Maßgabe, daß die Summe aus a, b und c kleiner oder gleich 3 ist und Rest R¹ in Mengen von mehr als 0,5 Gewichtsprozent basischem Stickstoff pro Organopolysiloxanmolekül vorhanden ist.

3. Zusammensetzung nach Anspruch 1 oder 2, dadurch gekennzeichnet, daß es sich bei der Organosiliciumverbindung (C) um solche aus Einheiten der Formel 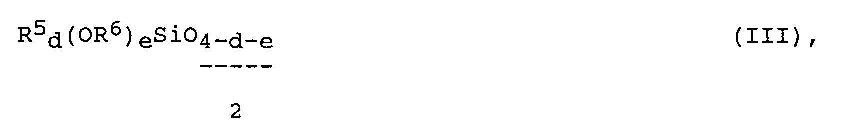 handelt, worin
R⁵ gleich oder verschieden sein kann und Wasserstoff oder einwertige, SiC-gebundene Kohlenwasserstoffreste mit 1 bis 8 Kohlenstoffatomen bedeutet,
R⁶ gleich oder verschieden sein kann und Wasserstoffatom, Methyl-, Ethyl- oder Propylrest bedeutet,
d 0, 1, 2, 3 oder 4 und
e 0, 1, 2, 3 oder 4 ist,
mit der Maßgabe, daß die Summe aus d und e kleiner oder gleich 4 ist und der Gehalt an basischem Stickstoff 0 bis 0,5 Gewichtsprozent, bezogen auf das Gewicht der jeweiligen Organosiliciumverbindung, beträgt.

4. Zusammensetzung nach Anspruch 1 bis 3, dadurch gekennzeichnet, daß Organosiliciumverbindung (C) eingesetzt wird.

5. Zusammensetzung nach Anspruch 4, dadurch gekennzeichnet, daß Organosiliciumverbindung (C) in Mengen von 0,1 bis 5 Gewichtsteilen, je Gewichtsteil Komponente (A), eingesetzt wird.

6. Zusammensetzung nach Anspruch 1 bis 5, dadurch gekennzeichnet, daß Fluor enthaltende, organische oder siliciumorganische Verbindung (B) in Mengen von 0,1 bis 50 Gewichtsteilen, je Gewichtsteil Bestandteil (A), eingesetzt wird.

7. Zusammensetzung nach Anspruch 1 bis 6, dadurch gekennzeichnet, daß Fluor enthaltende, organische oder siliciumorganische Verbindung (B) als wäßrige, gegebenenfalls organisches Lösungsmittel enthaltende Dispersion eingesetzt wird.

8. Zusammensetzung nach Anspruch 1 bis 6, dadurch gekennzeichnet, daß Fluor enthaltende, organische oder siliciumorganische Verbindung (B) in einem organischen Lösungsmittel gelöst eingesetzt wird.

9. Verfahren zur Imprägnierung von mineralischen Baustoffen, dadurch gekennzeichnet, daß eine Zusammensetzung gemäß Anspruch 1 bis 8 auf die zu imprägnierende Oberfläche aufgebracht wird.

10. Verfahren nach Anspruch 9, dadurch gekennzeichnet, daß es sich bei den mineralischen Baustoffen um alkalisch reagierende, mineralische Baustoffe handelt.

## Claims

1. Compositions for the impregnation of mineral building materials, which comprise
(A) a salt of an organic or inorganic acid and organopolysiloxane containing SiC-bonded radicals containing basic nitrogen, in amounts of at least 0.5 per cent by weight of basic nitrogen, based on the weight of this organopolysiloxane,
(B) a fluorine-containing organic or organosilicon compound and if appropriate
(C) an organosilicon compound containing basic nitrogen, in amounts of 0 to 0.5 per cent by weight, based on the weight of this organosilicon compound.

2. Composition according to Claim 1, characterized in that the organopolysiloxane from which constituent (A) is obtainable by reaction with an organic or inorganic acid is one of the formula 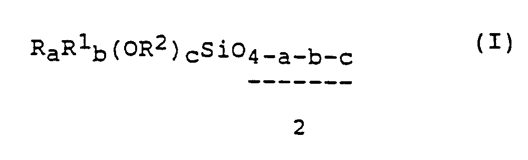 in which
R can be identical or different and denotes hydrogen or monovalent, SiC-bonded optionally substituted hydrocarbon radicals having 1 to 20 carbon atoms which are free from basic nitrogen,
R¹ can be identical or different and denotes monovalent, SiC-bonded radicals containing basic nitrogen,
R² can be identical or different and denotes hydrogen atom [sic] or monovalent alkyl radicals having 1 to 4 carbon atoms,
a is 0, 1, 2 or 3,
b is 0, 1, 2 or 3 and
c is 0, 1, 2 or 3,
with the proviso that the sum of a, b and c is less than or equal to 3 and the radical R¹ is present in an amount of more than 0.5 per cent by weight of basic nitrogen per organopolysiloxane molecule.

3. Composition according to Claim 1 or 2, characterized in that the organosilicon compound (C) is one comprising units of the formula 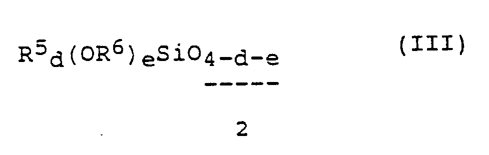 in which
R⁵ can be identical or different and denotes hydrogen or monovalent, SiC-bonded hydrocarbon radicals having 1 to 8 carbon atoms,
R⁶ can be identical or different and denotes hydrogen atom [sic], methyl, ethyl or propyl radical [sic],
d is 0, 1, 2, 3 or 4 and
e is 0, 1, 2, 3 or 4,
with the proviso that the sum of d and e is less than or equal to 4 and the content of basic nitrogen is 0 to 0.5 per cent by weight, based on the weight of the particular organosilicon compound.

4. Composition according to any one of Claims 1 to 3, characterized in that an organosilicon compound (C) is employed.

5. Composition according to Claim 4, characterized in that the organosilicon compound (C) is employed in amounts of 0.1 to 5 parts by weight per part by weight of component (A).

6. Composition according to any one of Claims 1 to 5, characterized in that the fluorine-containing organic or organosilicon compound (B) is employed in amounts of 0.1 to 50 parts by weight per part by weight of constituent (A).

7. Composition according to any one of Claims 1 to 6, characterized in that the fluorine-containing organic or organosilicon compound (B) is employed as an aqueous dispersion which contains an organic solvent, if appropriate.

8. Composition according to any one of Claims 1 to 6, characterized in that the fluorine-containing organic or organosilicon compound (B) is employed as a solution in an organic solvent.

9. Process for the impregnation of mineral building materials, characterized in that a composition according to any one of Claims 1 to 8 is applied to the surface to be impregnated.

10. Process according to Claim 9, characterized in that the mineral building-materials are alkaline mineral building materials.

## Revendications

1. Compositions pour l'imprégnation de matériaux de construction minéraux, qui comprennent :
(A) un sel d'un acide organique ou inorganique et d'un organopolysiloxane à radicaux en liaisons SiC avec azote basique dans une proportion d'au moins 0,5 % d'azote basique, par rapport au poids de l'organopolysiloxane,
ainsi que
(B) un composé organique ou un composé organo-silicié, contenant du fluor,
et le cas échéant
(C) un composé organo-silicié à azote basique dans des proportions de 0 à 0,5 % en poids, par rapport au poids de ce composé organo-silicié.

2. Composition selon la revendication 1, caractérisée en ce que l'organopolysiloxane, dont la réaction avec l'acide organique ou inorganique donne le constituant (A), est un organopolysiloxane de formule : 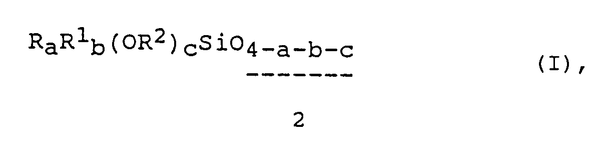 dans laquelle
les divers R éventuels peuvent être identiques ou différents et représentent l'hydrogène ou des radicaux hydrocarbonés monovalents sans azote basique, en liaisons SiC, ayant de 1 à 20 atomes de carbone et le cas échéant substitués,
les divers R¹ éventuels peuvent être identiques ou différents et représentent des radicaux monovalents en liaisons SiC avec azote basique,
les divers R² éventuels peuvent être identiques ou différents et représentent un atome d'hydrogène ou des restes alkyle monovalents ayant de 1 à 4 atomes de carbone,
a vaut 0, 1, 2 ou 3,
b vaut 0, 1, 2 ou 3 et
c vaut 0, 1, 2 ou 3,
avec les conditions que la somme de a, b et c soit inférieure ou égale à 3 et que le ou les radicaux R¹ soient dans une proportion telle qu'il y ait plus de 0,5 % en poids d'azote basique par molécule d' organopolysiloxane.

3. Composition selon la revendication 1 ou 2, caractérisée en ce que le composé organo-silicié (C) est un composé formé de motifs de formule : 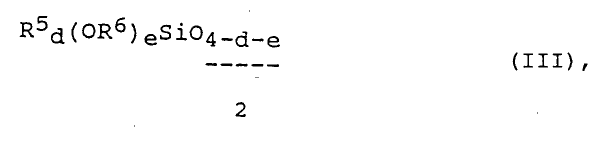 dans laquelle
les divers R⁵ éventuels peuvent être identiques ou différents et représentent l'hydrogène ou des radicaux hydrocarbonés monovalents en liaisons SiC ayant de 1 à 8 atomes de carbone,
les divers R⁶ éventuels peuvent être identiques ou différents et représentent un atome d'hydrogène ou le radical méthyle, éthyle ou propyle,
d vaut 0, 1, 2, 3 ou 4 et
e vaut 0, 1, 2, 3 ou 4,
avec les conditions que la somme de d et e soit inférieure ou égale à 4 et que la teneur en azote basique soit de 0 à 0,5 % en poids, rapporté au poids de chaque composé organo-silicié.

4. Composition selon l'une des revendications 1 à 3, caractérisée en ce qu'elle contient un composé organosilicié (C).

5. Composition selon la revendication 4, caractérisée en ce qu'elle contient le composé organo-silicié (C) dans une proportion de 0,1 à 5 parties en poids par partie du composant (A).

6. Composition selon l'une des revendications 1 à 5, caractérisée en ce qu'elle contient le composé organique ou le composé organo-silicié contenant du fluor (B) dans une proportion de 0,1 à 50 parties en poids, par partie du constituant (A).

7. Composition selon l'une des revendications 1 à 6, caractérisée en ce qu'elle contient le composé organique ou le composé organo-silicié contenant du fluor (B) en tant que dispersion aqueuse contenant éventuellement un solvant organique.

8. Composition selon l'une des revendications 1 à 6, caractérisée en ce qu'elle contient le composé organique ou le composé organo-silicié contenant du fluor (B) en solution dans un solvant organique.

9. Procédé d'imprégnation de matériaux de construction minéraux, caractérisé en ce que l'on applique sur la surface à imprégner une composition selon l'une des revendications 1 à 8.

10. Procédé selon la revendication 9, caractérisé en ce que les matériaux de construction minéraux sont des matériaux de construction minéraux à réaction alcaline.
